# EUROPEAN PATENT APPLICATION

(11) **EP 4 597 987 A1**
(43) Date of publication of application: **06.08.2025**
(21) Application number: 23886328.6
(22) Date of filing: 02.11.2023
(51) Int. Cl.: H04L 67/51, H04L 67/52, H04L 61/4541, H04L 61/4511

(54) **LOCATION-BASED SERVICE DISCOVERY SYSTEM HAVING HIERARCHICAL STRUCTURE**

(30) Priority: 02.11.2022 KR 20220144337
(71) Applicant: Samsung Electronics Co., Ltd., Suwon-si, Gyeonggi-do 16677 (KR)
(72) Inventor: LEE, Jicheol, Suwon-si, Gyeonggi-do 16677 (KR); GUTTMAN, Erik, Suwon-si, Gyeonggi-do, 16677 (KR)
(74) Representative: Gulde & Partner
(86) International application number: PCT/KR2023/017417
(87) International publication number: WO 2024/096633

(57) **Abstract**

The present disclosure relates to a 5G or 6G communication system for supporting higher data transmission rates. A method executed by a terminal according to an embodiment disclosed herein may comprise the steps of: transmitting a domain name system (DNS) query message including information related to the location of the terminal to a network entity that processes DNS messages in order to support edge computing; and receiving a DNS response message from the network entity in response to the DNS query message, wherein the information related to the location of the terminal includes at least one of information indicating the range from the location of the terminal or an indicator requesting that information indicating the range from the location of the terminal be configured.

## Description

### [Technical Field]

The disclosure relates to a wireless communication system, and more specifically, to a location-based service discovery system having a DNS function with a hierarchical structure in a cellular wireless communication system (5G system), and a method for providing a location-based service discovery function by utilizing a location measurement function of a terminal and a discovery function of an edge application server in the 5G system.

### [Background Art]

5G mobile communication technology defines a wide frequency band to enable fast transmission speeds and new services, and can be implemented not only in a sub-6GHz frequency band such as 3.5 gigahertz (3.5GHz), but also in an ultra-high frequency band ('above 6GHz') called millimeter wave (mmWave) such as 28GHz and 39GHz. In addition, in the case of 6G mobile communication technology, which is called systems beyond 5G communication, implementation in a terahertz band (e.g., 95GHz to 3 terahertz (3THz) band) is being considered to achieve a transmission speed that is 50 times faster than the 5G mobile communication technology and an ultra low latency time that is reduced by 1/10.

In the early stages of the 5G mobile communication technology, with the goal of ensuring service support and performance requirements for enhanced mobile broadband (eMBB), ultra-reliable low-latency communications (URLLC), and massive machine-type communications (mMTC), standardization has been made for beamforming and massive MIMO for mitigating a path loss of radio waves in a ultra-high frequency band and increase a transmission distance of the radio waves, support for various numerologies for efficient utilization of ultra-high frequency resources (operation of multiple subcarrier intervals, etc.) and dynamic operation of slot formats, initial access technology for supporting multi-beam transmission and broadband, definition and operation of a band-wide part (BWP), new channel coding methods, such as a low density parity check (LDPC) code for large-scale data transmission and a polar code for high reliable transmission of control information, L2 preprocessing, network slicing providing a dedicated network specialized for a specific service, etc.

Currently, discussions are underway for improvement and performance enhancement of the initial 5G mobile communication technology in consideration of services that the 5G mobile communication technology is intended to support, and physical layer standardization is in progress for technologies such as vehicle-to-everything (V2X) to help autonomous vehicles determine their driving based on their own locations and status information that the autonomous vehicles transmit and to increase user convenience, new radio unlicensed (NR-U) for system operation that meets various regulatory requirements in an unlicensed band, NR UE low power consumption technology (UE power saving), a non-terrestrial network (NTN) that is UE-satellite direct communication to secure coverage in areas where communication with a terrestrial network is impossible, and positioning.

In addition, standardization of wireless interface architecture/protocol fields is in progress for technologies such as industrial Internet of Things (IIoT) for supporting new services through linkage and convergence with other industries, integrated access and backhaul (IAB) that integrates and supports wireless backhaul links and access links to provide nodes for expanding network service areas, mobility enhancement including conditional handover and dual active protocol stack (DAPS) handover, and 2-step RACH for NR that simplifies random access procedures, and standardization of system architecture/service fields is also in progress for 5G baseline architecture (e.g., service based architecture, and service based interface) for combining network functions virtualization (NFV), software-defined networking (SDN) technology, mobile edge computing (MEC) that receives services based on a location of a UE, etc.

When such 5G mobile communication systems are commercialized, an explosive increase in connected devices will be connected to a communication network, so it is expected that improved functionality and performance of the 5G mobile communication systems and the integrated operation of the connected devices will be required. To this end, new researches are expected to be conducted on eXtended reality (XR) to efficiently support augmented reality (AR), virtual reality (VR), and mixed reality (MR), etc., improvement in 5G performance and reduction in complexity using artificial intelligence (AI) and machine learning (ML), AI service support, metaverse service support, drone communications, etc.

In addition, the development of these 5G mobile communication systems may serve as a basis for the development of not only multi-antenna transmission technology such as new waveform, full dimensional MIMO (FD-MIMO), array antenna, and large scale antenna to ensure coverage in the terahertz band of 6G mobile communication technology, high-dimensional spatial multiplexing technology using metamaterial-based lenses and antennas and orbital angular momentum (OAM) to improve the coverage of terahertz band signals, and reconfigurable intelligent surface (RIS) technology, but also full duplex technology for enhancing frequency efficiency and improving a system network of 6G mobile communication technology, AI-based communication technology that utilizes satellite and AI from the design stage and incorporates end-to-end AI support functions to realize system optimization, and next generation distributed computing technology that realizes services with complexity that exceeds the limits of UE computing capabilities by utilizing ultra-high-performance communication and computing resources, etc.

### [Disclosure]

### [Technical Problem]

The present disclosure provides a method for discovering multiple services available in a region where a terminal is located in a single manner in a single system.

For example, terminal devices, such as XR devices or smartphones, that want to utilize metaverse services, may receive the following services.
1) Services provided by a client using indoor navigation within a subway map
2) Services provided through a user's social network
3) Services provided by stores registered in a region

The above-described services provide a method for discovering various application services available near a user.

When multiple mobile communication service providers and multiple service providers provide their own location-based services, the present disclosure is to discover addresses of location-based services/servers provided by multiple service providers using a single protocol.

The problem to be solved in the present disclosure will be described in more detail by comparing with the existing services and technologies.

As a first example, a map app may have a system that shows information based on locations collected by a map service provider. Users who use map services through these map apps are not discovering region-based services, but rather, they are using a system that acquires location-based stored information, so users cannot find multiple services from different providers.. The present disclosure seeks to solve these problems by utilizing a single system, i.e., the DNS system, to integrate multiple services from different providers.

As a second example, the DNS system can transfer different IP addresses by region to a client with an EDNS client subnet option. However, by a method for finding neighboring servers based on a topology of an IP network, it is not possible to look up services based on precise location information and to search for services based on detailed location information such as a detailed location of a client and an inside/outside of a building. The present disclosure provides service search based on location information acquired by measuring a detailed location of a terminal.

Technical problems to be achieved by the present disclosure are not limited to the above-described objects, and other technical problems that are not mentioned may be obviously understood by those having ordinary skill in the art to which the present disclosure pertains from the following description.

### [Technical Solution]

According to the present disclosure for solving the above problems, a method performed by a terminal in a wireless communication system includes transmitting a domain name system (DNS) query message including information related to a location of the terminal to a network entity that processes a DNS message to support edge computing; and receiving a DNS response message from the network entity in response to the DNS query message, in which the information related to the location of the terminal includes at least one of information indicating a range from the location of the terminal or an indicator requesting a configuration of the information indicating the range from the location of the terminal.

The DNS query message may be transmitted to at least one DNS server within a DNS system via the network entity, and the DNS response message may be received from the at least one DNS server within the DNS system via the network entity, and
the DNS system may have a plurality of DNS servers hierarchically configured to search for a DNS record related to the range from the location of the terminal from a higher layer to a lower layer.

The DNS response message may be generated from at least one DNS server within the DNS system having a plurality of DNS servers hierarchically configured to search for a DNS record related to the range from the location of the terminal from a higher layer to a lower layer and received via the network entity, and include information on the DNS record related to the range from the location of the terminal.

The range from the location of the terminal may include at least one of a shape of a part or all of a sphere, a hemispherical shape, a triangular pyramid shape, a fan shape, or a polygonal shape.

According to the present disclosure for solving the above problems, a method performed by a network entity processing a domain name system (DNS) message to support edge computing in a wireless communication system includes receiving, from a terminal, a DNS query message including information related to a location of the terminal; and transmitting a DNS response message to the terminal in response to the DNS query message, in which the information related to the location of the terminal includes at least one of information indicating a range from the location of the terminal or an indicator requesting a configuration of the information indicating the range from the location of the terminal.

The method may further include transmitting the DNS query message received from the terminal to at least one DNS server within a DNS system; and receiving the DNS response message to be transmitted to the terminal from the at least one DNS server within the DNS system, in which the DNS system may have a plurality of DNS servers hierarchically configured to search for a DNS record related to the range from the location of the terminal from a higher layer to a lower layer.

The DNS response message may be generated from at least one DNS server within the DNS system having a plurality of DNS servers hierarchically configured to search for a DNS record related to the range from the location of the terminal from a higher layer to a lower layer and transmitted to the network entity, and include information on the DNS record related to the range from the location of the terminal.

The range from the location of the terminal may include at least one of a shape of a part or all of a sphere, a hemispherical shape, a triangular pyramid shape, a fan shape, or a polygonal shape.

According to the present disclosure for solving the above problems, a terminal of a wireless communication system includes a transceiver; and a controller connected to the transceiver, and transmitting a domain name system (DNS) query message including information related to a location of the terminal to a network entity that processes a DNS message to support edge computing and receiving a DNS response message from the network entity in response to the DNS query message, in which the information related to the location of the terminal includes at least one of information indicating a range from the location of the terminal or an indicator requesting a configuration of the information indicating the range from the location of the terminal.

According to the present disclosure for solving the above problems, a network entity processing a domain name system (DNS) message to support edge computing of a wireless communication system includes a transceiver; and a controller connected to the transceiver, and receiving, from a terminal, a DNS query message including information related to a location of the terminal, and transmitting a DNS response message to the terminal in response to the DNS query message, in which the information related to the location of the terminal includes at least one of information indicating a range from the location of the terminal or an indicator requesting a configuration of the information indicating the range from the location of the terminal.

### [Advantageous Effect]

According to the present disclosure, since the terminal utilizes the existing DNS server hierarchical structure, it is possible to search for multiple services provided by multiple mobile communication providers and multiple application service providers.

The function of returning the address of the edge computing server returns the topology-based server address associated with the IP address/UPF. However, according to the present disclosure, it is possible to return the precise location-based server address/service address at the level of the GPS location.

Effects which can be achieved by the present disclosure are not limited to the above-described effects. That is, other objects that are not described may be obviously understood by those skilled in the art to which the present disclosure pertains from the following description.

### [Description of Drawings]

FIG. 1 is a diagram illustrating a network structure and interface of a 5G system.
FIG. 2 is a diagram illustrating a location-based service discovery structure linked with EASDF.
FIG. 3 is a diagram illustrating an operation of a location-based DNS client.
FIG. 4 is a diagram illustrating a configuration of a hierarchical location-based DNS system.
FIG. 5 is a diagram illustrating an embodiment of a recursive DNS lookup method.
FIG. 6 is a diagram illustrating an embodiment of an iterative DNS lookup method.
FIG. 7 is a diagram illustrating an embodiment of a UE measurement location information-based DNS lookup procedure.
FIG. 8 is a diagram illustrating an embodiment of a DNS query message including location information.
FIG. 9 is a diagram illustrating an embodiment of a network location measurement-based DNS lookup procedure.
FIG. 10 is a diagram illustrating an embodiment of an internal structure of a terminal.
FIG. 11 is a diagram illustrating an embodiment of a DNS server structure.

### [Mode for Disclosure]

3GPP, which is responsible for cellular mobile communication standards, is standardizing a new core network structure named a 5G core (5GC) to drive the evolution from 4G LTE systems to 5G systems. The 5GC supports the following differentiated functions compared to an evolved packet core (EPC) which is a network core for 4G.

The 5GC introduces a network slice function. As the requirement of the 5G, the 5GC should support various forms of UE types and services; e.g., enhanced mobile broadband (eMBB), ultra reliable low latency communications (URLLC), and massive machine type communications (mMTC). Each of these UEs/services has different requirements for the core network. For example, the eMBB service may require a high data rate, while the URLLC service may require high stability and low latency. To satisfy these various service requirements, the network slice technology has been proposed.

Network slicing may mean a method for creating multiple logical networks (e.g., network slices) by virtualizing a single physical network. An activated network slice may be referred to as a network slice instance, and each network slice instance (NSI) may have different characteristics. A mobile communication provider may meet various service requirements for UEs/services by configuring network functions (NFs) appropriate to the characteristics of each network slice instance (NSI). For example, a mobile communication provider may efficiently support various 5G services (e.g., eMBB, URLLC, or mMTC) by allocating NSIs appropriate to the characteristics of services required for each UE.

The 5GC may easily support a network virtualization paradigm by separating a mobility management function and a session management function. In the 4G LTE, all UEs may receive services from the network through signaling exchange with a single core entity called a mobility management entity (MME) that is responsible for registration, authentication, mobility management, and session management functions. In the 5G, as the number of UEs (including MTC UEs, for example) increases explosively and the mobility and traffic/session characteristics that should be supported depending on a type of UEs are subdivided, when a single entity (e.g., MME) supports all functions, scalability for adding entities for each required function is bound to decrease. Therefore, various functions are being developed based on a structure that separates the mobility management function and the session management function in order to improve scalability in terms of the functional/implementation complexity and signaling load of a core entity that is responsible for a control plane.

Hereinafter, embodiments of the present disclosure will be described in detail with reference to the accompanying drawings. In addition, in describing the disclosure, when it is determined that a detailed description for known functions or configurations related to the disclosure may unnecessarily obscure the gist of the present disclosure, the detailed description therefor will be omitted. Further, the following terminologies are defined in consideration of the functions in the present disclosure and may be construed in different ways by the intention of users and operators, practice, etc. Therefore, the definitions thereof should be construed based on the contents throughout the specification. For the same reason, some components in the accompanying drawings are exaggerated, omitted, or schematically illustrated. In addition, the size of each component does not entirely reflect the actual size. The same reference numerals are assigned to the same or corresponding components in each drawing. Various advantages and features of the technical idea of the present disclosure and methods accomplishing them will become apparent from the following description of embodiments with reference to the accompanying drawings. However, the present disclosure is not limited to exemplary embodiments to be described below, but may be implemented in various different forms, these exemplary embodiments will be provided only in order to make the present disclosure complete and allow those skilled in the art to completely recognize the scope of the present disclosure, and the present disclosure will be defined by the scope of the claims. Throughout the specification, the same components will be denoted by the same reference numerals. In addition, in describing the present disclosure, when it is determined that a detailed description for the related functions or configurations related to the present disclosure may unnecessarily obscure the technical idea of the present disclosure, the detailed description therefor will be omitted. Further, the following terminologies are defined in consideration of the functions in the present disclosure and may vary depending on the intention of users and operators, practice, etc. Therefore, the definitions thereof should be construed based on the contents throughout the specification.

Hereinafter, a base station is an entity that performs resource allocation of a terminal, and may be at least one of an eNode B, a NodeB, a base station (BS), a radio access network (RAN), an access network (AN), a RAN node, a wireless access unit, a base station controller, or a node on a network. The terminal may include user equipment (UE), a mobile station (MS), a cellular phone, a smartphone, a computer, or a multimedia system capable of performing a communication function. In the present disclosure, downlink (DL) refers to a wireless transmission path of a signal that the base station transmits to the UE, and uplink (UL) refers to a wireless transmission path of a signal that the UE transmits to the base station. In addition, although an LTE or LTE-A system may be described below as an embodiment of the present disclosure, the embodiments of the present disclosure may be applied to other communication systems having similar technical backgrounds or channel types. For example, the 5G generation mobile communication technology (5G, new radio (NR)) developed after the LTE-A may be included in a system to which the embodiments of the present disclosure may be applied, and the 5G below may be a concept that includes the existing LTE, LTE-A, and other similar services. In addition, the embodiments of the present disclosure may be applied to other communication systems through some modifications without significantly departing from the scope of the present disclosure as determined by a person having skilled technical knowledge. In this case, it will be appreciated that each block of a processing flowchart and combinations of the flowcharts may be executed by computer program instructions.

Since these computer program instructions may be mounted in a processor of a general computer, a special computer, or other programmable data processing apparatuses, these computer program instructions executed through the processor of the computer or the other programmable data processing apparatuses create means performing functions described in a block(s) of the flow chart. Since these computer program instructions may also be stored in a computer usable or computer readable memory that may be directed to a computer or other programmable data processing apparatuses in order to implement the functions in a specific scheme, the computer program instructions stored in the computer usable or computer readable memory can also produce manufacturing articles including instruction means performing the functions described in the block(s) of the flowchart. Since the computer program instructions may also be mounted on the computer or the other programmable data processing apparatuses, the instructions performing a series of operation steps on the computer or the other programmable data processing apparatuses to create processes executed by the computer, thereby executing the computer or the other programmable data processing apparatuses may also provide steps for performing the functions described in a block(s) of the flowchart.

In addition, each block may indicate some of modules, segments, or codes including one or more executable instructions for executing a specific logical function(s) . Further, it is to be noted that functions mentioned in the blocks occur regardless of an order in some alternative example embodiments. For example, two blocks that are continuously illustrated may be simultaneously performed in fact or be performed in a reverse order depending on corresponding functions. The term '~ unit' used in the embodiment of the present disclosure refers to software or a hardware component such as a field programmable gate array (FPGA) or an application specific integrated circuit (ASIC), and '~ unit' play certain roles. However, '~ unit' is not limited to the software or the hardware. The '~unit' may be configured to be stored in a storage medium that may be addressed or may be configured to reproduce one or more processors. Accordingly, as an example, the '~unit' refers to components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit." In addition, components and '~ units' may be implemented to reproduce one or more central processing units (CPUs) in a device or a security multimedia card. In addition, in embodiments, the '~unit' may include one or more processors.

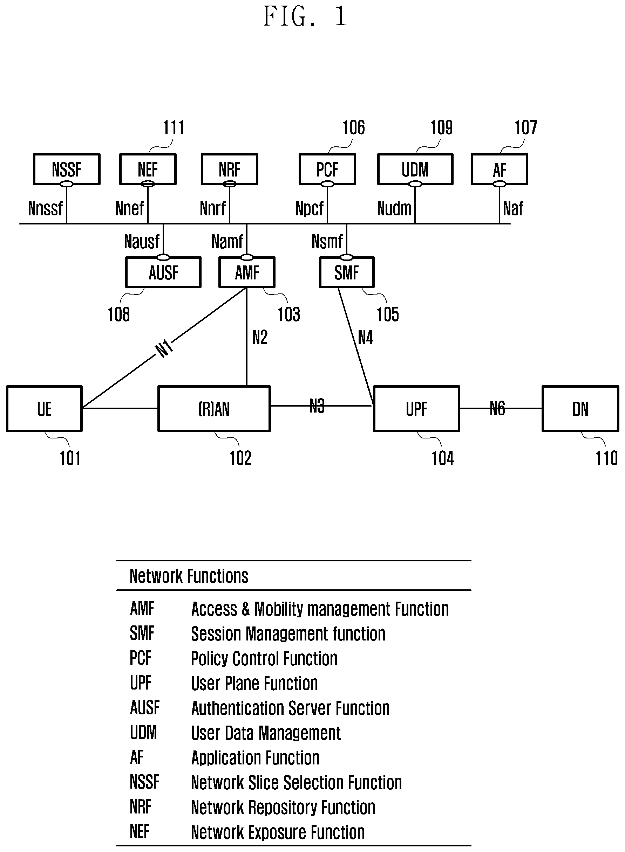

FIG. 1 is a diagram illustrating a network structure and interface of a 5G system according to an embodiment of the present disclosure. A network entity included in the network structure of the 5G system of FIG. 1 may include a network function (NF) depending on the system implementation.

Referring to FIG. 1, a network structure of a 5G system 100 may include various network entities. For example, the 5G system 100 may include an authentication server function (AUSF) 108, (core) an access and mobility management function (AMF) 103, a session management function (SMF) 105, a policy control function (PCF) 106, an application function (AF) 107, a unified data management (UDM) 109, a data network (DN) 110, a network exposure function (NEF) 113, an edge application service domain repository (EDR) 113, an edge application server (EAS) 114, an EAS discovery function (EASDF) 112, a user plane function (UPF) 104, a (radio) access network ((R)AN) 102, and a UE, i.e., user equipment (UE) 101.

Each NF of the 5G system 100 supports the following functions.

The AUSF 108 processes and stores data for authentication of the UE 101.

The AMF 103 provides functions for access and mobility management on a per-UE basis, and may be basically connected to one AMF on a per-UE basis. Specifically, the AMF 103 provides functions such as CN inter-node signaling for mobility between 3GPP access networks, termination of radio access network (RAN) CP interface (i.e., N2 interface), termination of non access stratum (NAS) signaling (N1), NAS signaling security (NAS ciphering and integrity protection), AS security control, registration management (registration area management), connection management, idle mode UE reachability (including control and performance of paging retransmission), mobility management control (subscription and policy), support for intra-system mobility and inter-system mobility, support for network slicing, SMF selection, lawful intercept (of AMF events and interfaces to LI systems), provision of session management (SM) message transfer between UE and SMF, transparent proxy for SM message routing, access authentication, access authorization including roaming authorization check, provision of SMS message transfer between UE and SMSF, and security anchor function (SAF) and/or security context management (SCM). Some or all of the functions of the AMF 103 may be supported within a single instance of one AMF.

The DN 110 means, for example, operator service, Internet access, or third-party service, etc. The DN 110 delivers a downlink protocol data unit (PDU) to the UPF 104 or receives the PDU transmitted from the UE 101 from UPF 104.

The PCF 106 provides a function of receiving information on a packet flow from an application server to determine policies such as mobility management and session management. Specifically, the PCF 106 supports functions such as support for a unified policy framework to control a network operation, provision of policy rules so that control plane function(s) (e.g., AMF, SMF, etc.) may enforce policy rules, implementation of a front end to access relevant subscription information for policy determinations within a user data repository (UDR).

The SMF 105 provides the session management function, and when the UE has multiple sessions, each session may be managed by a different SMF. Specifically, the SMF 105 supports functions such as session management (e.g., establishment, modification, and termination of session, including tunnel maintenance between UPF 104 and (R)AN 102 nodes), UE IP address allocation and management (optionally including authentication), UP function selection and control, traffic steering configuration to route traffic to appropriate destinations in UPF 104, termination of interface to policy control functions, enforcement of policy and quality of service (QoS) control parts, lawful intercept (of SM events and interfaces to LI systems), termination of SM part of NAS message, downlink data notification, initiator of AN specific SM information (delivered to (R)AN 102 through N2 via AMF 103), determination of SSC mode of session, and roaming function. Some or all of the functions of the SMF 105 may be supported within a single instance of one SMF.

The UDM 109 stores user subscription data, policy data, etc. The UDM 109 includes two parts, i.e., the application front end (FE) (not illustrated) and the user data repository (UDR) (not illustrated).

The FE includes a UDM FE that is responsible for location management, subscription management, credential processing, etc., and a PCF that is responsible for policy control. The UDR stores data required for the functions provided by the UDM-FE and policy profiles required by the PCF. The data stored in the UDR includes user subscription data and policy data that include a subscription identifier, security credential, access and mobility-related subscription data, and session-related subscription data. The UDM-FE accesses subscription information stored in the UDR and supports functions such as authentication credential processing, user identification handling, access authentication, registration/mobility management, subscription management, and SMS management.

The UPF 104 delivers the downlink PDU received from the DN 110 to the UE 101 via the (R)AN 102 and delivers the uplink PDU received from the UE 101 to the DN 110 via the (R)AN 102. Specifically, the UPF 104 supports functions such as anchor points for intra/inter RAT mobility, external PDU session points for interconnect to a data network, a user plane part of packet routing and forwarding, packet inspection and policy rule enforcement, lawful intercept, traffic usage reporting, an uplink classifier for supporting routing of traffic flow to a data network, branching points for supporting multi-homed PDU session, QoS handling for a user plane (e.g., packet filtering, gating, and uplink/downlink rate enforcement), uplink traffic validation (SDF mapping between a service data flow (SDF) and a QoS flow), transport level packet marking in uplink and downlink, downlink packet buffering, and downlink data notification triggering functions. Some or all of the functions of the UPF 104 may be supported within a single instance of one UPF.

The AF 107 interworks with the 3GPP core network to provide services (e.g., support for functions such as application impact on traffic routing, access to network capability exposure, and interworking with a policy framework for policy control).

The (R)AN 102 is a general term for a new radio access network that supports both evolved E-UTRA, which is an evolved version of 4G radio access technology, and new radio access technology (new radio (NR)) (e.g., gNB).

The gNB supports functions such as functions (i.e., radio bearer control, radio admission control, connection mobility control, and dynamic allocation of resources to UE in uplink/downlink (i.e., scheduling)) for radio resource management, internet protocol (IP) header compression, encryption and integrity protection of user data stream, selection of the AMF upon attachment of UE when routing to the AMF is not determined from information provided to UE, routing of user plane data to the UPF(s), routing of control plane information to AMF, connection setup and termination, scheduling and transmission of paging messages (generated from the AMF), scheduling and transmission of system broadcast information (generated from the AMF or operating and maintenance (O&M)), measurement and measurement reporting configuration for mobility and scheduling, transport level packet marking in uplink, session management, support for network slicing, QoS flow management and mapping to data radio bearer, support for UE in inactive mode, a distribution function of NAS message, a NAS node selection function, radio access network sharing, dual connectivity, and tight interworking between NR and E-UTRA.

The UE 101 means user equipment. The user equipment may be referred to as a terminal, mobile equipment (ME), a mobile station (MS), etc. In addition, the user equipment may be portable devices such as a laptop, a mobile phone, a personal digital assistant (PDA), a smartphone, and a multimedia device, or a non-portable device such as a personal computer (PC), a vehicle-mounted device.

The NEF 111 provides a means for securely exposing services and capabilities provided by 3GPP network functions, for example, for third parties, internal exposure/re-exposure, application functions, and edge computing. The NEF 111 receives information (based on the exposed capability(s) of other NF (s)) from other NF(s). The NEF 111 may store the received information as structured data using a standardized interface to a data storage network function. The stored information may be re-exposed to other NF(s) and AF(s) by the NEF 111 and used for other purposes such as analysis.

The EASDF 112 is an NF that may add an ECS option which may be expressed as, for each FQDN, an address of a DNS server to forward a DNS request of a UE and an IP subnet address to be added when forwarding the DNS request of the UE. The EASDF 112 receives EAS domain configuration information from the EDR 113 and performs processing on a DNS request message received from the UE according to the received information. In addition, the EASDF 112 is an NF that performs a function of receiving a UE IP address, location information of the UE within the 3GPP, DNS message processing rules, and DNS message reporting rules from the SMF 105, processing a DNS query message received from the UE and a DNS response message received from the DNS server, and transmitting information within the DNS message and statistical information obtained by processing the information to the SMF 105 according to the DNS message reporting rules.

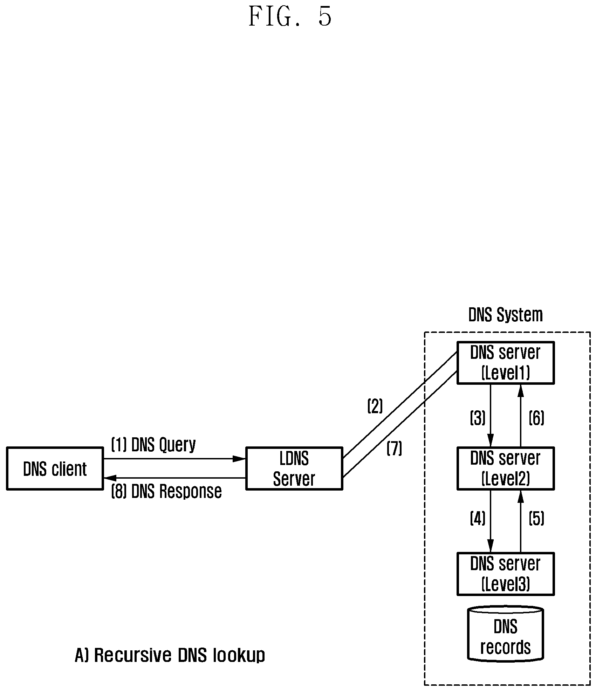

All the NFs illustrated in FIG. 5 may perform interworking with the NRF as needed.

The NRF supports a service discovery function. The NRF receives an NF discovery request from an NF instance and provides information on the discovered NF instance to the NF instance. Also, the NRF maintains available NF instances and services that the NF instances support.

Meanwhile, for convenience of description, FIG. 1 illustrates a reference model for a case where the UE 101 accesses one DN 110 using one PDU session, but the present disclosure is not limited thereto.

The UE 101 may access two (i.e., local and central) data networks simultaneously using multiple PDU sessions. In this case, two SMFs may be selected for different PDU sessions. However, each SMF may have the capability to control both the local UPF and central UPF within the PDU session.

In addition, the UE 101 may also access two (i.e., local and central) data networks provided within a single PDU session simultaneously.

In the 3GPP system, a conceptual link connecting between the NFs within the 5G system is defined as a reference point. As an example, the reference point(s) included in the 5G system 100 of FIG. 1 are as follows.
- N1: Reference point between UE 101 and AMF 103
- N2: Reference point between (R)AN 102 and AMF 103
- N3: Reference point between (R)AN 102 and UPF 104
- N4: Reference point between SMF 105 and UPF 104
- N5: Reference point between PCF 106 and AF 107
- N6: Reference point between UPF 104 and DN 110
- N7: Reference point between SMF 105 and PCF 106
- N8: Reference point between UDM 109 and AMF 103
- N9: Reference point between two core UPFs 104
- N10: Reference point between UDM 109 and SMF 105
- N11: Reference point between AMF 103 and SMF 105
- N12: Reference point between AMF 103 and AUSF 108
- N13: Reference point between UDM 109 and AUSF 108
- N14: Reference point between two AMFs 103
- N15: Reference point between PCF and AMF in non-roaming scenario, reference point between PCF and AMF within visited network in roaming scenario
- Nx: Reference point between SMF 105 and EASDF112
- Ny: Reference point between NEF(EDF) 111 and EASDF 112

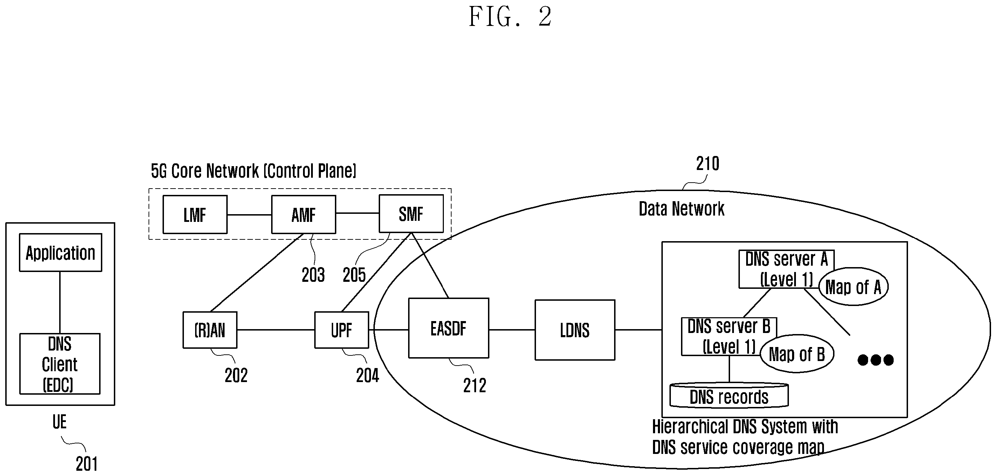

FIG. 2 is a diagram illustrating the network structure of the 5G system of FIG. 1 according to an embodiment of the present disclosure on a service basis.

Referring to FIG. 2, the 5G system 200 may include a UE 201, a (R)AN 202, an AMF 203, a UPF 204, an SMF 205, a PCF 206, an AF 207, an AUSF 208, a UDM 209, a DN 210, an NEF 211, an EASDF 212, an EDR 213, a network slice selection function (NSSF) 214, and an NRF 215.

The UE 201, the (R)AN 202, the AMF 203, the UPF 204, the SMF 205, the PCF 206, the AF 207, the AUSF 208, the UDM 209, the DN 210, the NEF 211, the EASDF 212, and the EDR 213 of FIG. 2 perform the same functions as the UE 101, the (R)AN 102, the AMF 103, the UPF 104, the SMF 105, the PCF 106, the AF 107, the AUSF 108, the UDM 109, the DN 110, the NEF 111, the EASDF 112, and the EDR 113 of FIG. 1.

The NSSF 214 may select a set of network slice instances serving the UE 201. In addition, the NSSF 214 may determine allowed network slice selection assistance information (NSSAI) and, if necessary, perform mapping for subscribed single-network slice selection assistance information (S-NSSAI). In addition, the NSSF 214 may determine configured NSSAI and, if necessary, perform mapping for the subscribed S-NSSAI. In addition, the NSSF 214 may determine a set of AMFs used to serve the UE or may inquire the NRF 215 depending on the configuration to determine a list of candidate AMFs.

The NRF 215 supports the service discovery function. The NRF receives the NF discovery request from the NF instance and provides the information on the discovered NF instance to the NF instance. Also, the NRF maintains the available NF instances and the services that the NF instances support.

FIG. 2 is a description of the system structure that provides the location-based service discovery function linked with the EASDF.

The edge application server discovery function (EASDF) is the network function (NF) of the 5GC for performing a discovery function of edge applications.

When the EASDF is utilized in the 5G core network, the EASDF address is configured as the DNS address that the SMF transfers to the UE upon establishing a PDU session of the UE, and is transferred to the UE.

The UE that receives the DNS server address from the SMF configures the EASDF address as the DNS server address in the EDC and transmits the subsequently generated DNS query message to the EASDF.

The Edge DNS client (EDC) refers to the DNS client function used to support the edge computing of the UE. The EDC is the function of the UE that performs the function of returning the IP address for the domain name from the application of the UE. The EDC performs the function of transmitting and receiving the DNS message to and from the DNS server receiving the DNS address upon establishing the PDU session.

The location management function (LMF) is the NF that performs the function of measuring and managing the location of the UE in the 5G core network. The LMF may perform a UE positioning procedure together with the UE to track the location of the UE.

The local DNS server (LDNS) is a local DNS server that transmits and receives the DNS message received by the EASDF from the UE to and from the local DNS server. The LDNS may forward the DNS query messages to the DNS server having a hierarchical structure in order to reply to DNS queries on its own.

The hierarchical DNS server system collectively refers to DNS servers having a tree structure. Each DNS server in the hierarchical DNS system has a map of DNS service coverage managed by the DNS server. Information on DNS records corresponding to the map or an address of another DNS server at the next level is stored. The DNS records stored by the DNS server may have A records storing IPv4 address information, AAAA records storing IPv6 address information, and SRV records having accessible address information of the service level. The SRV records may store information such as an address, an access protocol, a port number, a priority, a weight, and time to live (TTL) of a server.

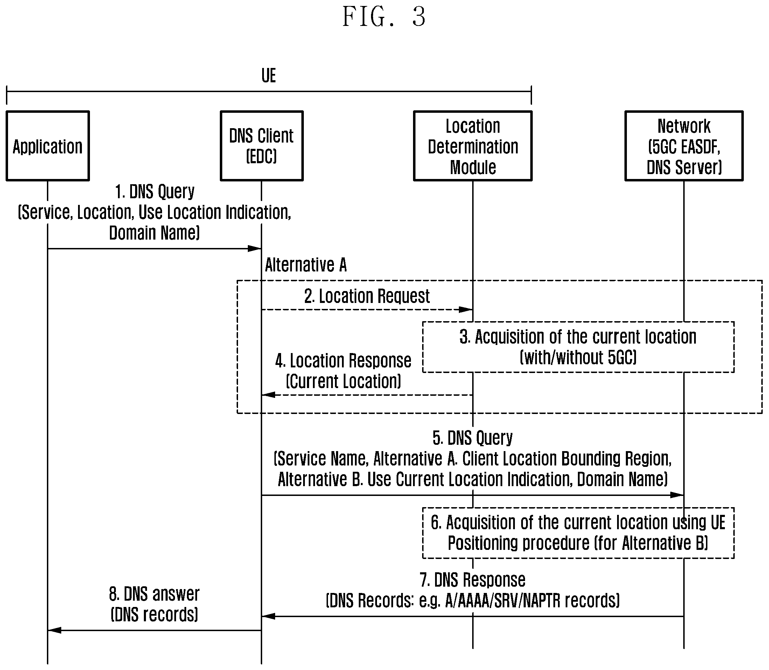

FIG. 3 is a diagram illustrating an operation of a location-based DNS client.

The operation of the location-based DNS client includes two methods: one in which the UE determines its own location, and another in which the network is allowed to measure the location of the UE. FIG. 3 describes these two methods as a UE-based location determination method (Alternative A) and a network-based location determination method (Alternative B), respectively. In this document, the DNS client and the edge DNS client (EDC) perform the same function.

Procedure 1. Receive a location-based DNS query request (DNS query) from an application through an API. The application transfers a DNS query request including a service name for finding a service, whether to use location information (use location indication), and a domain name to the DNS client (EDC). This request may be provided as the API provided by the UE operating system.

Procedures 2 to 4 are Alternative A procedures performed when the UE-based location determination is performed.

In procedure 2, the DNS client transmits a request to acquire the location of the UE to a module determining a location inside the UE.

In procedure 3, the module determining the location of the UE may measure the location of the UE by using a triangulation method using GNSS, GPS, and 3GPP mobile communication signals, or a non-3GPP communication technology (e.g., a communication and location estimation technology such as UWB) that is not a 3GPP network, or a visual positioning system. In this process, the module that measures the location of the UE may be linked with the 5G core network to perform the UE positioning procedure, thereby estimating the location of the UE. That is, the UE may acquire its current location information.

In procedure 4, the EDC receives the measured location information from the location measurement module inside the UE.

In procedure 5, the EDC generates the DNS query message. The DNS query message includes information such as the service name and the domain name (or naming authority) received from the application.

In case of the UE location measurement scheme (Alternative A), the EDC generates client location bounding region (CLBR) information from the location information received from the location measurement module within the UE. The EDC generates the DNS query message that includes the service name and the domain name received by the application and the generated CLBR information, and transmits the generated DNS query message to the DNS server address received during the corresponding PDU session establishment process existing in the network. In this case, the configured DNS server address may also be the address of the EASDF.

In the case of the network measurement scheme (Alternative B), the EDC configures the DNS query including the service name and the domain name received from the application, including an indicator that requests the network to measure the current UE address and configure the CLBR. The DNS query message may also request (request the CLBR to be configured in the network) the corresponding request through the service name. The EDC generates the DNS query message and transmits the DNS query message to the network.

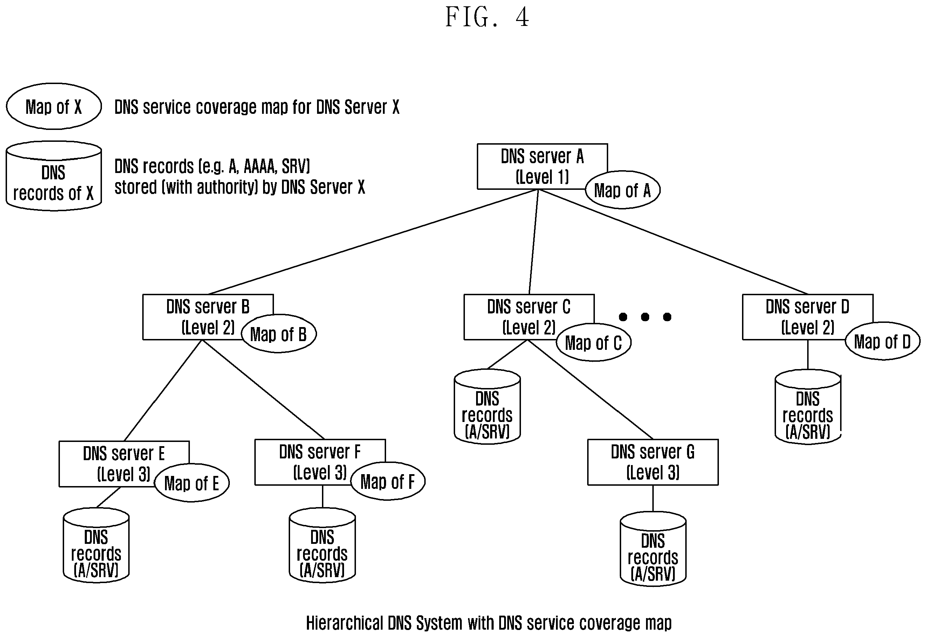

In procedure 6, the EASDF, which has received the DNS query message from the UE, performs a procedure of triggering the UE positioning procedure of the 5G system to measure the location of the UE when identifying a request or permission to perform the network measurement scheme, generating the CLBR in the DNS query message, and searching for the DNS records corresponding to the DNS query message through the DNS system. More details about the EASDF will be described in procedure 9, and more details about the DNS system will be described with reference to FIGS. 4, 5, and 6.

In procedure 7, the EDC receives the DNS response message including the DNS records from the network (EASDF).

In step 8, the EDC returns the DNS records to the application that has called the API for the location-based DNS query request.

FIG. 4 is a diagram illustrating a configuration of a hierarchical location-based DNS system.

A hierarchical location-based DNS system includes the following elements.

The DNS server performs the network server function existing in the network that receives the DNS query message and then looks up the corresponding DNS record and responds with the DNS response message.

The DNS server may be hierarchically configured. As illustrated in FIG. 4, DNS server A is level 1 and DNS servers B, C, and D are composed of child nodes. The DNS server A may have information on the child nodes of the hierarchically configured tree.

When the DNS server receives a query message in which the DNS information is handled by a child node, the DNS server may provide a search function of searching for a tree downward in a recursive mode or an iterative mode to acquire the corresponding DNS record.

In the case of the recursive mode, as described in FIG. 5 described below, the DNS server transmits the DNS query to a child node, the child node transmits the DNS query to its child node and continues to transmit the DNS query to a child node until the child node acquires the DNS record, when the child node acquires the DNS record matching the DNS query message, the child node returns the DNS record to an parent node, the parent node returns the DNS records to its parent node again, and finally, a root node may finally return the corresponding DNS record.

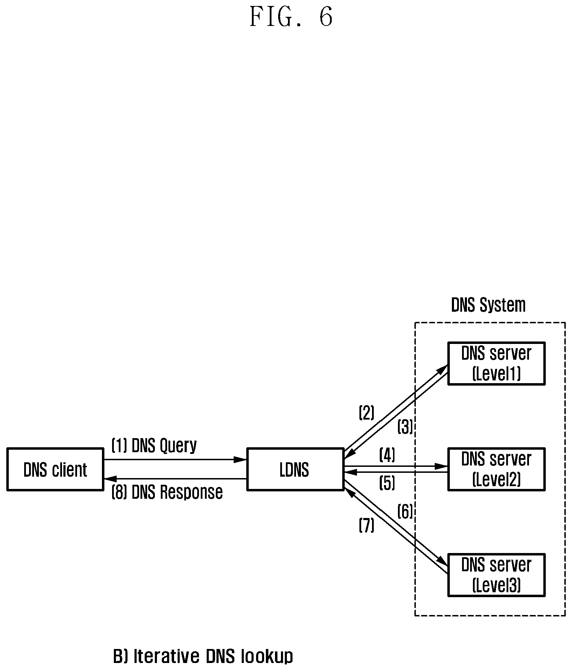

In the case of the iterative mode, as described in FIG. 6 described below, the DNS server returns the address of the DNS server for the child node, so that the node, which has transmitted the DNS query message to the DNS server, iteratively queries the DNS server of the child node to which the DNS query message has been returned, and the node transmitting the DNS query message iteratively queries until the DNS record is returned, so that the DNS record may be returned.

The DNS server with the DNS service coverage map may utilize the CLBR information included in the DNS query while finding the CLBR information included in the query within the map when searching for the DNS record or searching for the child node to recursively inquire an address of a subordinate DNS server within a certain DNS structure, or returning the subordinate DNS server address to iteratively look up the subordinate DNS server address.

A DNS service coverage map (DNS service coverage map for DNS server) refers to a map for identifying an area of a child node when the DNS server uses a scheme for iteratively or recursively looking up the DNS query. The DNS coverage map includes information on regions where the DNS records are located, and is used when looking up the DNS records from the lowest-level DNS servers existing in the hierarchical DNS tree.

The DNS record refers to a DNS record stored on the DNS server.

The DNS record may store records such as A, AAAA, SRV, and NAPTR.

The DNS record managed by the DNS server may include the following information.
A record: Indicate an IPv4 address for a domain name
AAAA record: IPv6 address for a domain name
NS record: It indicates an address of a name server. The NS record may be used when the DNS server returns an address of the next-level DNS server during the iterative DNS lookup procedure. In procedure 3 of FIG. 6, a level 1 DNS server returns an address of a level 2 DNS server, and in procedure 5 of FIG. 6, the level 2 DNS server may be used when returning an address of a level 3 DNS server.
SRV record: The details of the SRV record are specified in RFC2782. The SRV record may specify a host and a port for a specific service, such as VOIP, instant messaging, etc. Most other DNS records specify only the server or the IP address, but the SRV record may also include the port of the corresponding IP address in the corresponding IP address. To operate some Internet protocols, the SRV record needs to be used.

The DNS SRV record follows the following format.

Format _service._proto.name. TTL class type of record priority weight port target.

Example_xmpp._tcp.example.com. 86400 IN SRV 10 5 5223 server.example.com.

_xmpp may refer to a type of services (e.g., a service such as an XMPP protocol). _tcp refers to a TCP transport protocol.

example.com refers to the host or domain name.

Server.example.com is refers to a destination server.

5223 refers to a port number within the destination server.

The SRV record should refer to the A record or the AAAA record.

86400 is the time to live value specified in units of seconds. It indicates a time that the DNS record is valid.

The SRV record may have a priority and a weight value. The priority is a value used by a network administrator to determine the priority of the servers, and the weight value is a weight value to receive more traffic for servers with the same priority value. The SRV record may first identify the priority, and apply the weight value may be applied when having the same priority.

FIG. 5 is a diagram describing a recursive DNS lookup method.

Procedure 1. The DNS client transfers the DNS query message to the local DNS server (LDNS server).

Procedure 2. The LDNS server transmits the DNS query message to the top-level DNS server in the DNS system.

Procedure 3. The top-level DNS server identifies the DNS query message and selects the child node from the stored information. Thereafter, the top-level DNS server transmits the received DNS query message to the child node.

Procedure 4. The level 2 DNS server that has received the DNS query message from the level 1 DNS server identifies the DNS query message and transmits the DNS query message to the level 3 DNS server, which is the child node, from the stored information.

Procedure 5. The level 3 DNS server successfully searches for the DNS record matching the DNS query message in its self-managed database and returns the searched DNS record to the level 2 DNS server.

Procedure 6. The level 2 DNS server returns the received DNS record reply information to the level 1 DNS server.

Procedure 7. The level 1 DNS server, which is the top-level DNS server, returns the received DNS record to the LDNS server.

Procedure 8. The LDNS returns the replied DNS record information to the DNS client.

FIG. 6 describes the iterative DNS lookup method.

Procedure 1. The DNS client transmits the DNS query message to the LDNS server.

Procedure 2. The LDNS server transmits the DNS query message to the level 1 DNS server which is the top-level DNS server.

Procedure 3. The level 1 DNS server successfully looks up the address of the lower-level DNS server matching the DNS query and returns the address of the level 2 DNS server, which is the lower-level server, to the LDNS server.

Procedure 4. The LDNS server transmits the DNS query message to the address of the level 2 DNS server received from the level 1 DNS server (i.e., transmits the DNS query message to the level 2 DNS server).

Procedure 5. The level 2 DNS server successfully looks up the address of the lower-level DNS server matching the DNS query and returns the address of the level 3 DNS server, which is the lower-level server, to the LDNS server.

Procedure 6. The LDNS server transmits the DNS query message to the address of the level 3 DNS server received from the level 2 DNS server (i.e., transmits the DNS query message to the level 3 DNS server).

Procedure 7. The level 3 DNS server receives the DNS query message from the LDNS, and successfully looks up the DNS record matching the DNS query message. The level 3 DNS server returns the acquired DNS record information to the LDNS server.

Procedure 8. The LDNS server returns the DNS record information received from the level 3 DNS server to the DNS client.

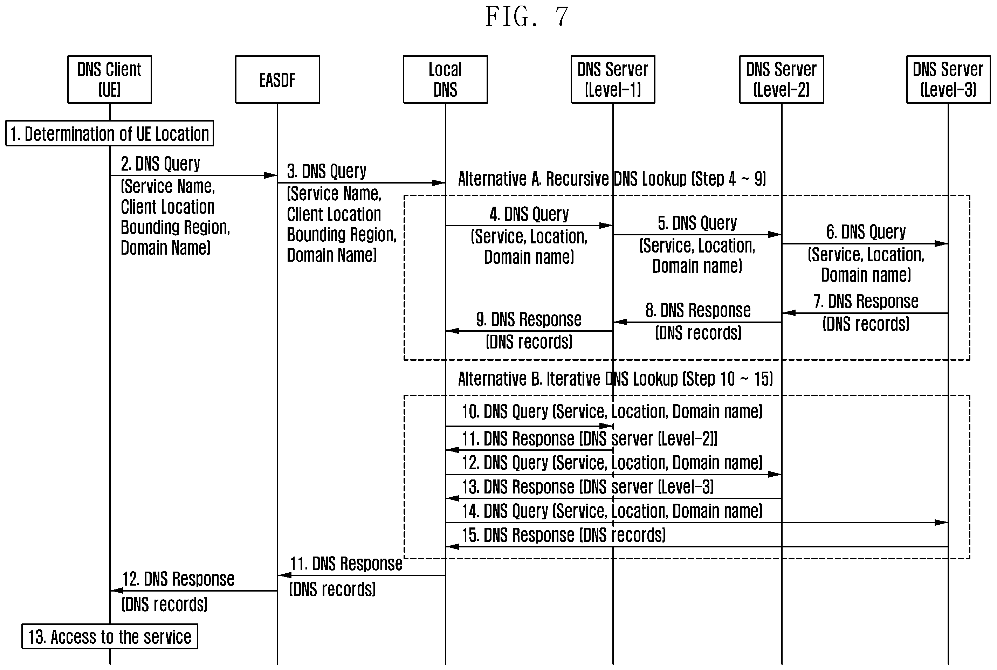

FIG. 7 is a diagram describing a UE measurement location information-based DNS lookup procedure.

Procedure 1. The UE may determine its location in various ways as described in Procedure 3 of FIG. 3.

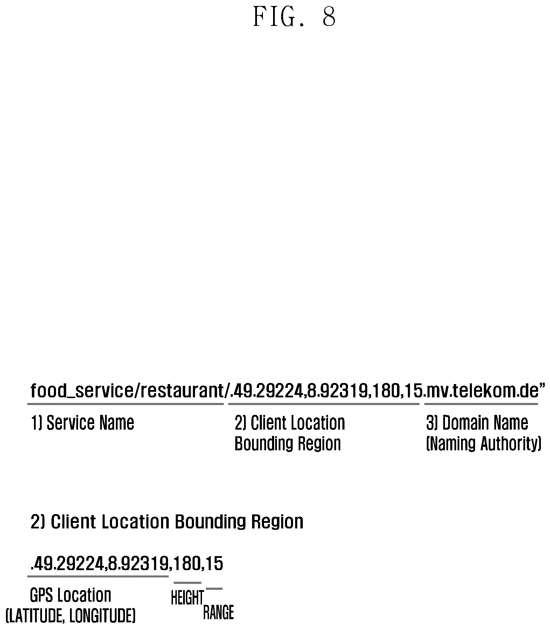

Procedure 2. The UE generates the DNS query message corresponding to the Alternative A scheme described in Procedure 5 of FIG. 3 and transfers the generated DNS query message to the EASDF. The DNS query message generated by the UE may include information on the service classification or service name, the client location bounding region information, and the domain name. A detailed example of this is described with reference to FIG. 8.

Procedure 3. The EASDF receives the DNS query message from the UE. The EASDF identifies that the message received from the UE already includes the CLBR information and transmits the message to the LDNS server supporting the CLBR information. The LDNS server performs a DNS lookup using the recursive DNS lookup method (Procedures 4 to 9) described in FIG. 5 or the iterative DNS lookup method (Procedures 10 to 15) described in FIG. 6 or an appropriately combined scheme (not illustrated) of the two schemes.

Procedures 4 to 9. The LDNS server performs the DNS lookup using the recursive DNS lookup method and receives the corresponding DNS record information as the DNS lookup result.

Procedures 10 to 15. The LDNS server performs the DNS lookup procedure using the iterative DNS lookup method and receives the DNS record information as the corresponding lookup result.

Procedure 11. The LDNS server receives the looked up DNS record result by utilizing the location information of the UE from the hierarchical DNS system and returns the received DNS record to the EASDF.

Procedure 12. The EASDF server returns the DNS record received from the LDNS to the DNS client.

Procedure 13. The DNS client receives the DNS record and returns the contents of the received DNS record to the application. The application may acquire the plurality of DNS records. The application may initiate the access to multiple services by considering the priorities and weight values included in the acquired DNS records.

FIG. 8 describes the DNS query message including the location information.

FIG. 8 is an example of the DNS query message including the location information and the service information.

As illustrated in FIG. 8, the DNS query message may include the information on the service name, the client location bounding region information, and the domain name as follows. The description of each piece of information is as follows.

Service classification information: It indicates a hierarchically classified service type. For example, a restaurant may exist under food-server classification. By hierarchically classifying services, the services may be classified in a hierarchical form with a tree structure like a directory.

Client location bounding region information: It may display information on a region that a client wants to look up. Example of the CLBR information may include GPS latitude and longitude information, and height information from a water surface to indicate a spatial location. In addition, the CLBR information may include range information to indicate the range of the space where the lookup is requested. The CLBR information is information that may refer to the range of the region for which the lookup is requested. In this example, the CLBR is specified in the form of a sphere that is included in the range from the location on the Earth, including the latitude, longitude, height, and range information. However, the CLBR may be expressed in various forms, such as a triangular pyramid shape, a hemispherical shape, or a polygonal shape, through various expression methods.

Domain name (or Naming Authority) information: It indicates information that may specify a type of domain that represents a country, a company, such as samsung.co.kr, and a hierarchically configurable domain, such as samsung, that represents a company name.

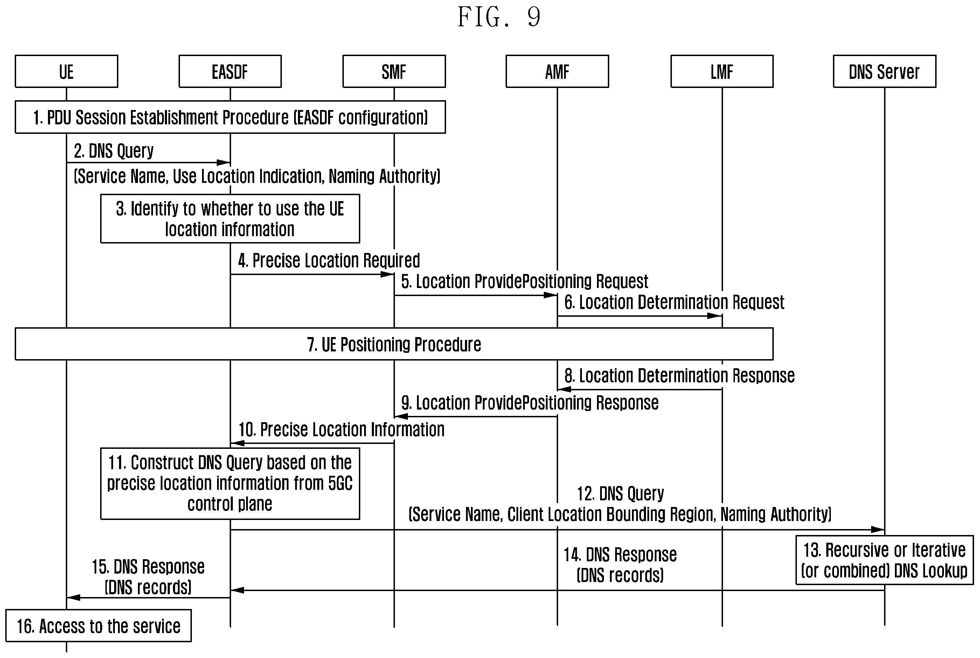

FIG. 9 describes a network location measurement-based DNS lookup procedure. FIG. 9 describes a procedure performed in a scenario where the EASDF exists in a 3GPP core network and the EASDF is utilized for the edge computing.

Procedure 1. In the PDU session establishment process, the SMF for the UE configures the address of the EASDF to the address of the UE in the PDU session establishment procedure of the UE. The SMF tranfers DNS processing rules to the EASDF, and the EASDF processing rules may include rules for network location-based DNS message processing.

Procedure 2. The network location measurement-based DNS query message is transferred at the request of the application of the UE. The network location measurement-based DNS query message includes the following information. The network location measurement-based DNS query message includes the service name/service type, the domain name (the naming authority in FIG. 9 is used interchangeably with the domain name), and an indicator ("use location indication") requesting or permitting location measurement on the network.

Procedure 3. The EASDF may identify the DNS query message from the contents included in the DNS message processing rule received from the SMF, and determine whether the location measurement is requested from the network or whether to permit the location measurement (i.e., whether to allow the location measurement request). The EASDF may be an explicit indicator ("use location indication" in FIG. 9) transmitted from the UE, or may extract corresponding information from a specific service name (e.g., location-service/restaurant).

Procedures 4 to 6. The EASDF may ultimately request the positioning of the UE to LMF through control plane NF of the 5G core network. In FIG. 9, the EASDF stores UE-specific context associated with the SMF, and thus may identify UE-specific context information from the IP address of the DNS query received from the UE, and may tranfer information requesting an initiation of the positioning of the corresponding UE to the SMF. The SMF may identify the AMF identification information for the UE and transfer a message requesting provision of the location information to the AMF. The AMF may select the LMF responsible for positioning the UE and transfer a message requesting the LMF to perform the positioning of the UE. In the example of this performance procedure, the structure in which the control plane message is transfer from the EASDF to the SMF, from the SMF to the AMF, and from the AMF to the LMF is described. However, the EASDF may directly transfer the message to the control plane to the LMF, which may perform the positioning of the UE in various ways within the 5G control plane, or transfer the request for positioning through other NFs within the 5G core network responsible for the identification information for the LMF.

Procedure 7. The LMF performs the positioning procedure together with the UE. The UE positioning procedure may be performed by the LMF through the AMF, the RAN, etc.

Procedures 8 to10. The location information (precise location information) of the UE acquired from the LMF is transferred to the AMF, transferred from the AMF to the SMF again, and from the SMF to the EASDF. As described in procedures 4 to 6, the location information of the UE acquired from the LMF may be transferred through the NF responsible for another control plane in the 5G core network.

Procedure 11. The EASDF may generate the DNS query message using the acquired location information of the UE. The DNS query message may include the service name/type, the domain name (Naming Authority), and the CLBR information as described in FIG. 8, and in Procedure 11, the EASDF may generate the CLBR information included in the DNS query message from the acquired UE information.

Procedure 12. The EASDF transfers the generated DNS query message to the location-based DNS system having the hierarchical structure.

Procedure 13. The hierarchical location-based DNS system identifies the transmitted service information and location information included in the DNS query message transmitted by the EASDF and looks up the DNS records in the recursive or iterative manner. The procedure performed in Procedure 13 may be the same procedure as the recursive DNS lookup procedures of Procedures 4 to 9 and the procedures of Procedures 10 to 15, which are performed by the LDNS and DNS servers illustrated in FIG. 7.

Procedure 14. The DNS server returns the looked up results in the DNS system to the EASDF.

Procedure 15. The EASDF returns the results of the DNS record received from the DNS system to the UE.

Procedure 16. The DNS client of the UE receives the DNS record and returns the contents of the received DNS record to the application. The application may acquire the plurality of DNS records. The application may initiate the access to multiple services by considering the priorities and weight values included in the acquired DNS records.

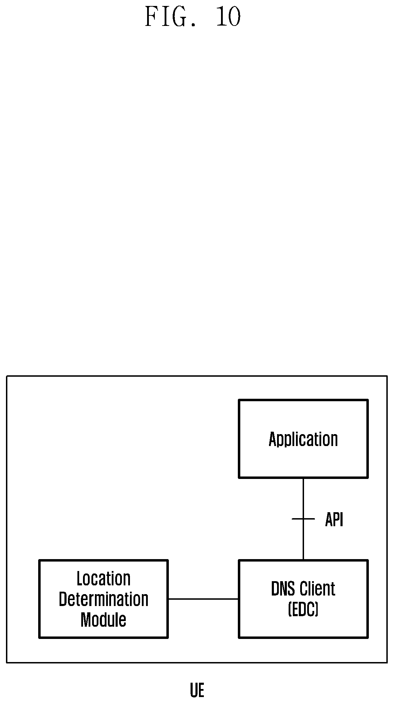

Functions inside a terminal will be described with reference to FIG. 10.

Referring to FIG. 10, the terminal has a location information determination module, a DNS client module, and multiple applications.

The DNS service utilizing the DNS system provided by the DNS client may be provided to the application through the API provided by an operating system existing in the terminal.

When the DNS client receives a terminal measurement location-based DNS request, the DNS client may measure the location of the terminal by being linked with the module that determines the location of the terminal inside the terminal. The terminal according to an embodiment of the present disclosure may further include a communication unit, a storage, and/or a controller. However, the components of the terminal are not limited to the above-described examples. For example, the terminal may include more or fewer components than the above-described components. In addition, the communication unit, the storage, and the controller may be implemented in the form of a single chip. In addition, the controller may include one or more processors.

The communication unit performs functions for transmitting and receiving signals through a wireless channel. For example, the communication unit may perform a conversion function between a baseband signal and a bit stream according to a physical layer specification of a system. For example, when transmitting data, the communication unit may generate complex symbols by encoding and modulating a transmission bit stream. In addition, when receiving data, the communication unit may reconfigure a reception bit stream by demodulating and decoding the baseband signal. In addition, the communication unit may up-convert the baseband signal into an RF band signal and the transmit the RF band signal through an antenna, and down-convert the RF band signal received through the antenna into the baseband signal. For example, the communication unit may include a transmit filter, a receive filter, an amplifier, a mixer, an oscillator, a DAC, an ADC, etc.

In addition, the communication unit may include a plurality of transmission and reception paths. Furthermore, the communication unit may include at least one antenna array composed of a plurality of antenna elements. In terms of the hardware, the communication unit may be composed of a digital circuit and an analog circuit (e.g., radio frequency integrated circuit (RFIC)). Here, the digital circuit and the analog circuit may be implemented in one package. In addition, the communication unit may include a plurality of RF chains. Furthermore, the communication unit may perform beamforming.

The communication unit may transmit and receive signals as described above. Accordingly, all or part of the communication unit may be referred to as a 'transmitter', a 'receiver', or a 'transceiver'. In addition, in the following description, the transmission and reception performed through the wireless channel may be used as meaning including that the processing as described above is performed by the communication unit.

The storage may store data such as a basic program, an application program, and configuration information for the operation of the terminal. The storage may be composed of a volatile memory, a non-volatile memory, or a combination of the volatile and non-volatile memories. In addition, the storage may provide stored data according to a request from the controller.

The controller controls the overall operations of the terminal. For example, the controller may transmit and/or receive signals through the communication unit. In addition, the controller may record and read data in the storage. The controller may perform protocol stack functions required by communication specifications. To this end, the controller may include at least one processor or microprocessor, or the controller may be a part of a processor. In addition, a part of the communication unit and the controller may be referred to as a communication processor (CP). According to an embodiment, the controller may control the terminal to perform operations according to embodiments to be described below.

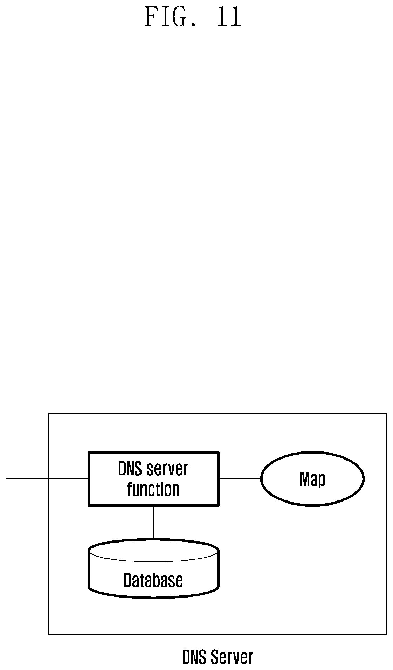

FIG. 11 is a diagram illustrating a configuration of a DNS server. The DNS server includes the following functions.

Referring to FIG. 11, the DNS server function has a function of a DNS server that receives a DNS query message, identifies contents of the received DNS query message, identifies information on a service name/type included in the query message, information (referred to as CLBR in the present disclosure) that may identify a location of a client and a range of the location, and information on a domain name, and configures and returns a DNS response message including DNS record information or a next-level DNS server address searched based on DNS service coverage map information and database information on DNS records.

When operating in a recursive mode, the DNS server may make a recursive DNS query to the next-level DNS server, and when receiving the DNS response message from the next level DNS server, the DNS server may also perform a function of returning the DNS response message as the response information received from the next-level DNS server to the client that has originally performed the DNS query.

The DNS server has a map of DNS service coverage managed by the DNS server. The information on the corresponding DNS records or an address of another DNS server at the next level may be stored in the map.

The DNS records stored by the DNS server may have A records storing IPv4 address information, AAAA records storing IPv6 address information, and SRV records having accessible address information of the service level. The SRV records may store information such as an address, an access protocol, a port number, a priority, a weight, and time to live (TTL) of a server.

The DNS server according to an embodiment of the present disclosure may further include a communication unit, a storage, and/or a controller. However, the components of the DNS server are not limited to the above-described examples. For example, the DNS server may include more or fewer components than the above-described components. In addition, the communication unit, the storage, and the controller may be implemented in the form of a single chip. In addition, the controller may include one or more processors.

The communication unit performs functions for transmitting and receiving signals through a wireless channel. For example, the communication unit may perform a conversion function between a baseband signal and a bit stream according to a physical layer specification of a system. For example, when transmitting data, the communication unit may generate complex symbols by encoding and modulating a transmission bit stream. In addition, when receiving data, the communication unit may reconfigure a reception bit stream by demodulating and decoding the baseband signal. In addition, the communication unit may up-convert the baseband signal into an RF band signal and the transmit the RF band signal through an antenna, and down-convert the RF band signal received through the antenna into the baseband signal. For example, the communication unit may include a transmit filter, a receive filter, an amplifier, a mixer, an oscillator, a DAC, an ADC, etc.

In addition, the communication unit may include a plurality of transmission and reception paths. Furthermore, the communication unit may include at least one antenna array composed of a plurality of antenna elements. In terms of the hardware, the communication unit may be composed of a digital circuit and an analog circuit (e.g., radio frequency integrated circuit (RFIC)). Here, the digital circuit and the analog circuit may be implemented in one package. In addition, the communication unit may include a plurality of RF chains. Furthermore, the communication unit may perform beamforming.

The communication unit may transmit and receive signals as described above. Accordingly, all or part of the communication unit may be referred to as a 'transmitter', a 'receiver', or a 'transceiver'. In addition, in the following description, the transmission and reception performed through the wireless channel may be used as meaning including that the processing as described above is performed by the communication unit.

The storage may store data such as a basic program, an application program, and configuration information for the operation of the DNS server. The storage may be composed of a volatile memory, a non-volatile memory, or a combination of the volatile and non-volatile memories. In addition, the storage may provide stored data according to a request from the controller.

The controller controls the overall operations of the DNS server. For example, the controller may transmit and/or receive signals through the communication unit. In addition, the controller may record and read data in the storage. The controller may perform protocol stack functions required by communication specifications. To this end, the controller may include at least one processor or microprocessor, or the controller may be a part of a processor. In addition, a part of the communication unit and the controller may be referred to as a communication processor (CP). According to an embodiment, the controller may control the DNS server to perform operations according to embodiments to be described below.

## Claims

1. A method performed by a terminal in a wireless communication system, the method comprising:
transmitting, to a network entity that processes a domain name system (DNS) message, a DNS query message comprising information associated with a location of the terminal to support an edge computing; and
as a response to the DNS query message, receiving, from the network entity, a DNS response message,
wherein the information associated with the location of the terminal comprises at least one of information on a range from the location of the terminal or an indicator requesting a configuration of the information on the range from the location of the terminal.

2. The method of claim 1, wherein the DNS query message is transmitted to at least one DNS server within a DNS system via the network entity, and the DNS response message is received from the at least one DNS server within the DNS system via the network entity, and
wherein the DNS system has a plurality of DNS servers hierarchically configured to search for a DNS record associated with the range from the location of the terminal from a higher layer to a lower layer.

3. The method of claim 1, wherein the DNS response message is generated from at least one DNS server within a DNS system having a plurality of DNS servers hierarchically configured to search for a DNS record associated with the range from the location of the terminal from a higher layer to a lower layer and received via the network entity, and comprises information on the DNS record associated with the range from the location of the terminal.

4. The method of claim 1, wherein the range from the location of the terminal comprises at least one of a shape of a part or all of a sphere, a hemispherical shape, a triangular pyramid shape, a fan shape, or a polygonal shape.

5. A method performed by a network entity processing a domain name system (DNS) message to support an edge computing in a wireless communication system, the method comprising:
receiving, from a terminal, a DNS query message comprising information associated with a location of the terminal; and
as a response to the DNS query message, transmitting, to the terminal, a DNS response message ,
wherein the information associated with the location of the terminal comprises at least one of information on a range from the location of the terminal or an indicator requesting a configuration of the information on the range from the location of the terminal.

6. The method of claim 5, further comprising:
transmitting, to at least one DNS server within a DNS system, the DNS query message received from the terminal; and
receiving, from the at least one DNS server within the DNS system, the DNS response message to be transmitted to the terminal,
wherein the DNS system has a plurality of DNS servers hierarchically configured to search for a DNS record associated with the range from the location of the terminal from a higher layer to a lower layer.

7. The method of claim 5, wherein the DNS response message is generated from at least one DNS server within the DNS system having a plurality of DNS servers hierarchically configured to search for a DNS record associated with the range from the location of the terminal from a higher layer to a lower layer and transmitted to the network entity, and comprises information on the DNS record associated with the range from the location of the terminal.

8. The method of claim 5, wherein the range from the location of the terminal comprises at least one of a shape of a part or all of a sphere, a hemispherical shape, a triangular pyramid shape, a fan shape, or a polygonal shape.

9. A terminal in a wireless communication system, the terminal comprising:
a transceiver; and
a processor coupled with the transceiver and configured to:
transmit, to a network entity that processes a domain name system (DNS) message, a DNS query message comprising information associated with a location of the terminal to support an edge computing, and
as a response to the DNS query message, receive, from the network entity, a DNS response message,
wherein the information associated with the location of the terminal comprises at least one of information on a range from the location of the terminal or an indicator requesting a configuration of the information on the range from the location of the terminal.

10. The terminal of claim 9, wherein the DNS query message is transmitted to at least one DNS server within a DNS system via the network entity, and the DNS response message is received from the at least one DNS server within the DNS system via the network entity, and
wherein the DNS system has a plurality of DNS servers hierarchically configured to search for a DNS record associated with the range from the location of the terminal from a higher layer to a lower layer.

11. The terminal of claim 9, wherein the DNS response message is generated from at least one DNS server within a DNS system having a plurality of DNS servers hierarchically configured to search for a DNS record associated with the range from the location of the terminal from a higher layer to a lower layer and received via the network entity, and comprises information on the DNS record associated with the range from the location of the terminal.

12. The terminal of claim 9, wherein the range from the location of the terminal comprises at least one of a shape of a part or all of a sphere, a hemispherical shape, a triangular pyramid shape, a fan shape, or a polygonal shape.

13. A network entity processing a domain name system (DNS) message to support an edge computing in a wireless communication system, the network entity comprising:
a transceiver; and
a processor coupled with the transceiver and configured to:
receive, from a terminal, a DNS query message comprising information associated with a location of the terminal, and
as a response to the DNS query message, transmit, to the terminal, a DNS response message ,
wherein the information associated with the location of the terminal comprises at least one of information on a range from the location of the terminal or an indicator requesting a configuration of the information on the range from the location of the terminal.

14. The network entity of claim 13, wherein the processor is further configured to:
transmit, to at least one DNS server within a DNS system, the DNS query message received from the terminal, and
receive, from the at least one DNS server within the DNS system, the DNS response message to be transmitted to the terminal,
wherein the DNS system has a plurality of DNS servers hierarchically configured to search for a DNS record associated with the range from the location of the terminal from a higher layer to a lower layer.

15. The network entity of claim 13, wherein the DNS response message is generated and received from at least one DNS server within a DNS system having a plurality of DNS servers hierarchically configured to search for a DNS record associated with the range from the location of the terminal from a higher layer to a lower layer, and comprises information on the DNS record associated with the range from the location of the terminal, and
wherein the range from the location of the terminal comprises at least one of a shape of a part or all of a sphere, a hemispherical shape, a triangular pyramid shape, a fan shape, or a polygonal shape.
